# EUROPÄISCHE PATENTSCHRIFT

(11) **EP 2 622 256 B1**
(45) Veröffentlichungstag und Bekanntmachung des Hinweises auf die Patenterteilung: **12.06.2019**
(21) Anmeldenummer: 11766936.6
(22) Anmeldetag: 27.09.2011
(51) Int. Cl.: F21K 9/00, F21K 9/64, F21Y 115/10, F21Y 113/00

(54) **LICHTSYSTEM MIT ERHÖHTER EFFIZIENZ**
LIGHT SYSTEM WITH INCREASED EFFICIENCY
SYSTÈME LUMINEUX À EFFICACITÉ ACCRUE

(30) Priorität: 27.09.2010 DE 102010041420
(43) Veröffentlichungstag der Anmeldung: 07.08.2013
(73) Patentinhaber: OSRAM GmbH, 80807 München (DE)
(72) Erfinder: BERBEN, Dirk, 58313 Herdecke (DE); FRISCHEISEN, Joerg, 86830 Schwabmünchen (DE); JERMANN, Frank, 86343 Königsbrunn (DE); LANGE, Stefan, 86157 Augsburg (DE)
(86) Internationale Anmeldenummer: PCT/EP2011/066724
(87) Internationale Veröffentlichungsnummer: WO 2012/049015

(56) Entgegenhaltungen:
- EP-A1- 1 024 399
- WO-A1-2010/052640
- WO-A1-2010/132150
- US-A1- 2007 223 219

## Beschreibung

### Technisches Gebiet

Die Erfindung geht aus von einem Lichtsystem mit erhöhter Effizienz gemäß dem Oberbegriff des Anspruchs 1. Derartige Lichtsysteme sind insbesondere für Allgemeinbeleuchtung geeignet.

### Stand der Technik

Aus der US 6 234 648 ist ein Lichtsystem bekannt, bei dem blaue LEDs und rote LEDs zusammen mit einem Leuchtstoff benutzt werden, der die Strahlung der blauen LED in grüne Strahlung verwandelt, wobei der Leuchtstoff entfernt von der blauen LED angebracht ist (sog. Remote-Phosphor-Konzept). Nachteilig an diesem Remote-Phosphor-Konzept ist, dass das Licht der roten LEDs ebenfalls den Leuchtstoff, der als Konverter wirkt, durchdringen muss. Durch Streuung und Restabsorption im grünen Leuchtstoff wird hier Effizienz im roten Spektralbereich verloren.

Die US 2007/223219 A1 offenbart eine Multi-Chip-Leuchtdioden-Lampe (LED-Lampe) zum Bereitstellen von weißem Licht. Dazu ist ein erster LED-Chip ist auf einem ersten Chipmontagebereich montiert und ein zweiter LED-Chip ist auf einem zweiten Chipmontagebereich montiert. Außerdem bedeckt ein erster Leuchtstoff den ersten LED-Chip zumindest teilweise. Zusätzlich kann ein zweiter Leuchtstoff den ersten und / oder den zweiten LED-Chip zumindest teilweise bedecken.

Die EP 1 024 399 A1 offenbart eine zweidimensionale Anordnung von LED, wobei die LED Licht in unterschiedlichen Bereichen des optischen Spektrums emittierten. Außerdem ist ein Leuchtstoff vorgesehen, der das emittierte Licht der LED in Licht im grünen Bereich des optischen Spektrums umwandelt. Dabei ist die Anordnung so konfiguriert, dass insgesamt weißes Licht erzeugt wird.

Die am 18.11.2010 veröffentlichte Anmeldung WO 2010/132150 A1 zeigt ein Lichtsystem basierend auf mindestens zwei Chips, insbesondere Chips enthaltende LEDs, wobei dem ersten Chip ein Leuchtstoff zur zumindest teilweisen Konversion der Strahlung des ersten Chips beabstandet vorgelagert ist. Der zweite Chip emittiert Strahlung größerer Wellenlänge als der erste Chip und ist so angeordnet ist, dass seine Strahlung im wesentlichen nicht vom Leuchtstoff absorbiert wird.

### Darstellung der Erfindung

Die Aufgabe der vorliegenden Erfindung ist es, ein Lichtsystem mit Remote-Phosphor-Konzept bereitzustellen, das diesen Nachteil überwindet und ohne Effizienzverlust im roten Spektralbereich auskommt. Insbesondere soll die Abstrahlung des roten Lichts vom Konverter entkoppelt werden, ohne die Lichtmischung nachteilig zu beeinflussen. Diese Aufgabe wird gelöst durch die kennzeichnenden Merkmale der unabhängigen Ansprüche 1, 10 oder 13.

Besonders vorteilhafte Ausgestaltungen finden sich in den abhängigen Ansprüchen.

Erfindungsgemäß wird jetzt ein Lichtsystem auf Basis einer Konversions-LED und einer reinen LED, insbesondere einer roten LED, bereitgestellt.

Dabei wird eine hohe Effizienz und Gleichmäßigkeit der Abstrahlung erreicht.

Bei transmissiven Remote-Phosphor-Ansätzen mit Konversions-LED und Rot-Zumischung durch einzelne Rot-LEDs tritt das Problem auf, dass das rote Licht durch die Leuchtstoff-Schicht auf einem Träger transmittiert werden muss. Obwohl der Leuchtstoff selbst im roten Spektralbereich praktisch absorptionsfrei ist, ergibt sich durch die größere optische Weglänge des roten Lichts, genauer durch die Reflektanz der Leuchtstoff-Schicht, im Bauteil ein Effizienz-Nachteil. Die hier vorgestellte Erfindung erhöht die Effizienz.

Bisherige Ansätze mit Remote-Phosphor homogenisieren das durch rot emittierende LEDs zugemischte rote Licht durch die Streuung des Leuchtstoffs auf dem Träger. Sämtliche lichtemittierende Bauteile sind in einem Gehäuse, einer "Lichtbox" mit verschiedenen möglichen Bauformen, angebracht. Durch Mehrfachreflexionen und Streuung des Primärlichts (hier insbesondere blau und rot) erfolgt eine Homogenisierung. Außerhalb des Lichtsystems ergibt sich eine homogene Lichtabgabe. Der Effizienzverlust des roten Lichts durch die Mehrfachreflexionen in der "Lichtbox" werden hingenommen.

Erfindungsgemäß erfolgt eine räumliche Trennung der blauen und roten Lichtquellen, die durch einen Chip oder ein Array von Chips realisiert sind. Die Einkopplung des roten Lichts erfolgt in die Trägerplatte bzw. Substrat der Leuchtstoffschicht. Die Leuchtstoffschicht ist hier bevorzugt "unten" auf dem Substrat angebracht, also der blauen Lichtquelle zugewandt. Das rote Licht wird oberhalb der Leuchtstoffschicht bzw. oberhalb des ganzen Substrats eingekoppelt.

Für die Einkopplung des roten Lichts in das Substrat ist das Substrat so dick, dass die roten Chips am Seitenrand angebracht sein können und in das Substrat einstrahlen. Die Trägerschicht wirkt dann wie ein Lichtleiter und die Streuung an der Unterseite des Substrats sorgt für eine diffuse Auskopplung des roten Lichts in Vorwärtsrichtung. Dabei sorgt zum einen die Grenzschicht des Substrats unten, und zum andern der daran angebrachte Leuchtstoff selbst als Reflektor-/Streu-Schicht.

Alternativ zeigt das Array der roten LEDs in Strahlrichtung schräg nach oben und die Mischung erfolgt in einem rohrartigen Lichtleiter etc. oberhalb des Substrats.

Vorteilhaft an dieser Anordnung ist, dass das rote Licht den Leuchtstoff nicht mehr durchdringen muss. Es finden keine Mehrfachreflexionen in der Schicht statt bzw. dieser Prozess wird als Auskoppelmechanismus stark unterdrückt. Ein einziger Streuprozess eines roten Photons ist zur Auskopplung ausreichend. Entsprechend fallen die Verlustprozesse kleiner aus, die Effizienz steigt.

Wesentliche Merkmale der Erfindung in Form einer nummerierten Aufzählung sind:
1. Lichtsystem basierend auf mindestens zwei Chips, insbesondere Chips enthaltende LEDs, wobei ein Mittel zur zumindest teilweisen Konversion der Strahlung eines ersten Chips vorhanden ist, wobei einem zur Konversion bestimmten ersten Chip eine einen Leuchtstoff enthaltende Schicht als Konversionsmittel vorgelagert ist, die mindestens einen Teil der primären Strahlung des ersten Chips in sekundäre Strahlung konvertiert, wobei der zweite Chip Strahlung größerer Wellenlänge als der erste Chip emittiert, die Schicht beabstandet vom ersten Chip angeordnet ist, wobei der zweite Chip so angeordnet ist, dass seine Strahlung im wesentlichen nicht vom Leuchtstoff absorbiert wird, dadurch gekennzeichnet, dass der zweite Chip in Strahlrichtung aufwärts schräg eingesetzt ist.
2. Lichtsystem nach Merkmalskombination 1, dadurch gekennzeichnet, dass der erste Chip UV bis blau emittiert und dass der zweite Chip gelb bis rot emittiert. Bei einem ersten UV-Chip ist der Leuchtstoff blau emittierend und die zweite LED gelb emittierend. Bei einem blau emittierenden ersten Chip ist der Leuchtstoff gelb bis grün emittierend, was den Peak der Emission betrifft, und der zweite Chip ist orange, magenta oder rot emittierend.
3. Lichtsystem nach Merkmalskombination 1, dadurch gekennzeichnet, dass der Leuchtstoff blaue Strahlung absorbiert und grüne bis gelbe Strahlung emittiert.
4. Lichtsystem nach Merkmalskombination 1, dadurch gekennzeichnet, dass der erste Chip als ein Array auf einem Substrat realisiert ist.
5. Lichtsystem nach Merkmalskombination 1, dadurch gekennzeichnet, dass die Schicht auf einer transparenten Scheibe in Strahlrichtung vor dem ersten Chip angebracht ist.
6. Lichtsystem nach Merkmalskombination 1, dadurch gekennzeichnet, dass der zweite Chip als ein Array realisiert ist, das außen um den Rand der Scheibe herum gruppiert ist, und das insbesondere oberhalb der Schicht in Strahlrichtung gesehen angeordnet ist.
7. Lichtsystem nach Merkmalskombination 1, dadurch gekennzeichnet, dass der Leuchtstoff einen Granat aufweist, der insbesondere Gallium und Aluminium gleichzeitig enthält.
8. Lichtsystem nach Merkmalskombination 1, dadurch gekennzeichnet, dass das Lichtsystem ein topfartiges Gehäuse aufweist, wobei der erste Chip auf dem Boden des Topfes angebracht ist, und wobei die Schicht als Deckel für den Topf wirkt.
9. Lichtsystem nach Merkmalskombination 1, dadurch gekennzeichnet, dass oberhalb der Scheibe ein optisches Element, insbesondere ein Lichtleiter, angebracht ist, das die Strahlung beider Chips zu weiß mischt, insbesondere auf Basis des RGB-Mischprinzips.
10. Lichtsystem basierend auf mindestens zwei Chips, insbesondere Chips enthaltende LEDs, wobei ein Mittel zur zumindest teilweisen Konversion der Strahlung eines ersten Chips vorhanden ist, wobei einem zur Konversion bestimmten ersten Chip eine einen Leuchtstoff enthaltende Schicht als Konversionsmittel vorgelagert ist, die mindestens einen Teil der primären Strahlung des ersten Chips in sekundäre Strahlung konvertiert, wobei der zweite Chip Strahlung größerer Wellenlänge als der erste Chip emittiert, die Schicht (6) beabstandet vom ersten Chip (2) angeordnet ist, wobei der zweite Chip (3; 28) so angeordnet ist, dass seine Strahlung im wesentlichen nicht vom Leuchtstoff absorbiert wird, dadurch gekennzeichnet, dass die den Leuchtstoff enthaltende Schicht auf einer dem ersten Chip zugewandten Seite eines Substrats angebracht ist und die Dicke des Substrats ausreichend ist um die zweiten Chips am seitlichen Rand des Substrats anordnen zu können, so dass deren Strahlung in das Substrat eingekoppelt wird.
11. Lichtsystem nach Merkmalskombination 10, dadurch gekennzeichnet, dass der erste Chip (2) blau emittiert und dass der zweite Chip (3; 28) rot emittiert.
12. Lichtsystem nach Merkmalskombination 10 oder 11, dadurch gekennzeichnet, dass der Leuchtstoff einen Granat aufweist, der insbesondere Gallium und Aluminium gleichzeitig enthält.
13. Lichtsystem basierend auf mindestens zwei Chips, insbesondere Chips enthaltende LEDs, wobei ein Mittel zur zumindest teilweisen Konversion der Strahlung eines ersten Chips vorhanden ist, wobei einem zur Konversion bestimmten ersten Chip eine einen Leuchtstoff enthaltende Schicht als Konversionsmittel vorgelagert ist, die mindestens einen Teil der primären Strahlung des ersten Chips in sekundäre Strahlung konvertiert, wobei der zweite Chip (28) Strahlung größerer Wellenlänge als der erste Chip emittiert, dadurch gekennzeichnet, dass das Lichtsystem eine LED-Lampe ist, wobei der Leuchtstoff auf einer ersten Kuppel aufgebracht ist, die sich über die ersten Chips wölbt, und wobei die zweiten Chips innerhalb einer zweiten Kuppel sitzen, aber gleichzeitig außerhalb der ersten Kuppel, wobei die zweite Kuppel ein Streumittel zum Mischen der Strahlung beider Chips aufweist.
14. Lichtsystem nach Merkmalskombination 13, dadurch gekennzeichnet, dass die LED-Lampe ein Basisteil aufweist, von dem aus sich insbesondere die beiden Kuppeln wölben, wobei das Basisteil einen umlaufenden Kreisring aufweist, auf dem die zweiten Chips montiert sind.
15. Lichtsystem nach Merkmalskombination 13, dadurch gekennzeichnet, dass die zweiten Chips außen auf der ersten Kuppel angebracht sind, insbesondere auf streifenartigen Bändern.
16. Lichtsystem nach Merkmalskombination 13, dadurch gekennzeichnet, dass der erste Chip blau emittiert und dass der zweite Chip rot oder Magenta oder orange emittiert.
17. Lichtsystem nach Merkmalskombination 13, dadurch gekennzeichnet, dass der Leuchtstoff blaue Strahlung absorbiert und grüne bis gelbe Strahlung emittiert.

### Kurze Beschreibung der Zeichnungen

Im Folgenden soll die Erfindung anhand mehrerer Ausführungsbeispiele näher erläutert werden. Die Figuren zeigen:
Fig. 1 ein Lichtsystem gemäß dem Stand der Technik;
Fig. 2 ein neuartiges Lichtsystem, erstes Ausführungsbeispiel;
Figur 3 ein neuartiges Lichtsystem, zweites Ausführungsbeispiel.
Figur 4 eine LED-Lampe als Realisierung des Lichtsystems;
Figur 5 und 6 je ein weiteres Ausführungsbeispiel einer LED-Lampe.

### Bevorzugte Ausführungsform der Erfindung

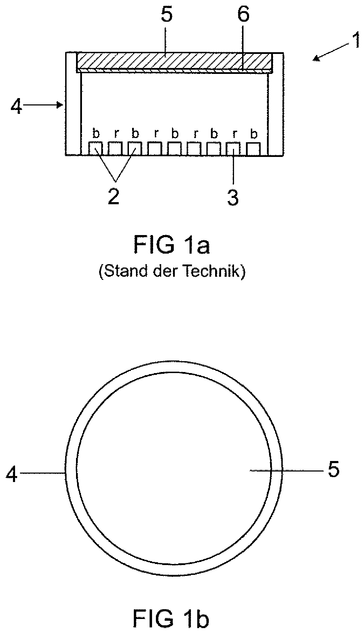

Figur 1 zeigt den Aufbau eines Lichtsystems 1 für weißes Licht auf RGB-Basis wie an sich bekannt, siehe dazu beispielsweise US-B 7 213 940. Die Lichtquelle ist ein Halbleiterbauelement mit einem blauen (b) Chip 2 des Typs In-GaN mit einer Peakemissionswellenlänge von beispielsweise 450 nm. Das Array enthält weiter auch rot (r) emittierenden LEDs 3.

Das Gehäuse 4 ist eine topfartige Lichtbox. Diese Box ist nach oben durch eine Leuchtstoff-Schicht 6 auf einem Träger oder Substrat 5 abgeschlossen. Der Leuchtstoff ist insbesondere Granat, abgeleitet von YAG:Ce. Die Leuchtstoffschicht 6 befindet sich "unten", auf der dem inneren der Lichtbox zugewandten Seite des Substrats. Das blaue Licht wird zu einem festgelegten Teil vom Leuchtstoff absorbiert bzw. konvertiert und der Rest des blauen Lichts wird gestreut. Die Rückstreuung wird durch die weiß ausgekleidete Lichtbox 4 aufgefangen und erneut auf die Leuchtstoffschicht 6 reflektiert. Durch die diffuse Reflektion innerhalb der Box erfolgt eine Homogenisierung der Lichtabgabe.

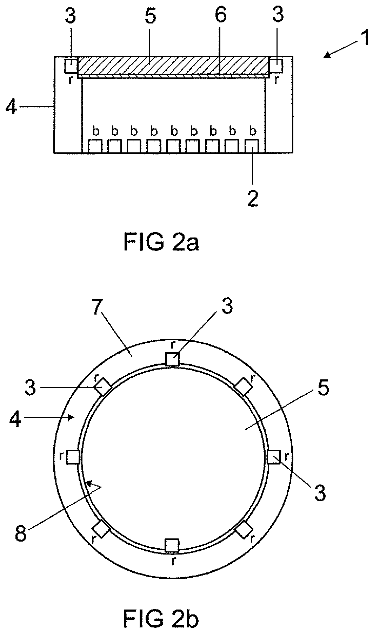

Figur 2 zeigt eine neuartige Anordnung eines Lichtsystems 1. Innerhalb der "Lichtbox" 4 befinden sich ausschließlich blau emittierende LEDs 2. Die roten LEDs 3 befinden sich am deckelseitigen Rand der Box 4 und werden seitlich in den Träger bzw. Substrat 5, das transparent ist und bevorzugt aus Glas oder Kunststoff besteht, eingekoppelt. Die Seitenfläche 7 des Trägers neben und zwischen den roten LEDs 3 wird bevorzugt mit einem diffusen Reflektormaterial beschichtet, geeignet ist ein Material wie TiO2. Die Lichtleit-Eigenschaft des Trägers wird durch die Leuchtstoffschicht 6 "unten" gestört. Es erfolgt eine Lichtauskopplung in Vorwärts-Richtung. Das rote Licht wird also mit einer einzigen Streuung aus der Lampe extrahiert. Mehrfachstreuungen des roten Lichts sind drastisch unwahrscheinlicher als bei der bekannten Lösung. Ähnlich funktioniert im Prinzip die Lichtauskopplung in Tachonadeln oder side-illuminated LCD-Display-Hinterleuchtungen. Neu hierbei ist der Einsatz eines im Roten möglichst absorptionsfreien Leuchtstoffs in der Schicht 6 als auskoppelndes Bauteil. Geeignet ist dabei insbesondere ein grün emittierender Leuchtstoff des Typs Granat A3B5O12:Ce, insbesondere YAGaG:Ce, der gleichzeitig Aluminium und Gallium enthält. Geeignet ist als Komponente A vor allem Y und/oder Lu. Für eine Peak-Wellenlänge der primären Strahlung im Bereich 430 bis 450 nm, insbesondere bis 445 nm, eignet sich vorteilhaft als Leuchtstoff ein Granat mit dem Kation A = Lu, und wobei B gleichzeitig Anteile von Al und Ga aufweist, insbesondere 10 bis 40 Mol.-% Ga, insbesondere 20 bis 30%, bei der Komponente B enthält, Rest ist Al.

Das Trägerelement 5 kann und sollte so strukturiert sein, daß die Lichtauskopplung im Roten so eingestellt wird, daß eine möglichst homogene Abstrahlung erreicht wird und das rote Licht möglichst vor Erreichen der gegenüber der einzelnen roten LED 3 liegenden seitlichen Wand 8 der Scheibe ausgekoppelt wird. Im Idealfall ist die Weglänge des roten Lichts also kleiner als der Durchmesser des Trägerelements oder Substrats 5.

Diese Anordnung liefert eine sehr kompakte, gut homogenisierte Lichtquelle für weiß.

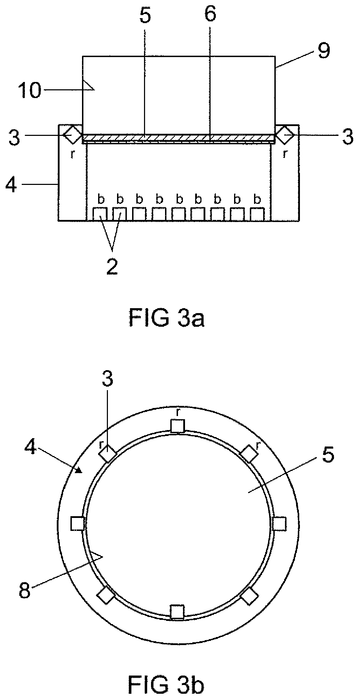

Figur 3 zeigt ein weiters Ausführungsbeispiel, bei dem das Substrat 5 relativ dünn ist, und bei dem die roten LEDs 3 oberhalb des Substrats 5 angebracht sind. Sie sind schräg nach oben in Strahlrichtung angeordnet. Darüber ist ein rohrartiger Lichtleiter 9 als optisches Element angebracht, dessen innere Wand 10 reflektierend wirkt, entweder durch Totalreflexion oder durch reflektierende Beschichtung. Das Licht wird dabei erst im Lichtleiter gemischt.

Je nach gewünschter Stoßrichtung, wie beispielsweise möglichst hohe Farbwiedergabe (CRI), möglichst hohe Effizienz, spezieller Color-Gamut oder ein wie auch immer gewünschter Kompromiss aus diesen Größen muss das System Konversions-LED/Leuchtstoff/Rot-LED unterschiedlich eingestellt werden, auch abhängig von der gewünschten Lichtfarbe.

Die blauen LEDs, dominante Wellenlänge bei 430 bis 470 nm, müssen zum gewählten Leuchtstoff passen, bevorzugt sind das Granate, die von YAG:Ce abgeleitet sind, also A3B5O12:Ce, bevorzugt ist A=Y und/oder Lu, bevorzugt ist B = Al und/oder Ga. Als Beispiel sei eine kaltweiße LED (4500 bis 5500 K) genannt, hier sollte bevorzugt einfaches YAGaG:Ce mit 10%Ga verwendet werden, hier liegt die optimale LED-Wellenlänge um 460 nm (455 bis 465 nm). Für coolwhite neutralweiße Lichtfarbe (insbesondere etwa 3800 bis 4000 K) sollte bevorzugt YAGaG mit Galliumanteil von 15 bis 35%, Rest Aluminium verwendet werden. Hier liegt die optimale LED-Wellenlänge um 450 nm (445 bis 455 nm). Bei warmweißer Lichtfarbe (2700 bis 3000 K) sollte bevorzugt LuAGaG mit Galliumanteil von 15 bis 35%, Rest Aluminium verwendet werden. Hier liegt die optimale LED-Wellenlänge um die 438 nm (433 bis 443 nm).

Entsprechend muss auch die Wellenlänge der rote LED angepasst werden. Der rote Teil des Spektrums sollte weit überwiegend zwischen 600 bis 630 nm (dominante Wellenlänge) liegen. Eine schmalbandige kurzwellige Emission (bevorzugt FWHM kleiner als 25 nm) ist im Hinblick auf hohe Effizienz zu bevorzugen, jedoch bietet eine breitbandige rote Emission (bevorzugt FWHM 30 bis 50 nm) Vorteile im Hinblick auf gute Farbwiedergabe. Eine relativ langwellige rote Emission im Bereich 620 bis 650 nm (dominante Wellenlänge) vergrößert den erreichbaren Color-Gamut. Der Einfluss einer Wellenlängendrift der roten LED ist bei einer dominanten Wellenlänge im Bereich 600 bis 610 nm minimal, da in diesem Bereich das Maximum der Rotempfindlichkeit des menschlichen Auges liegt.

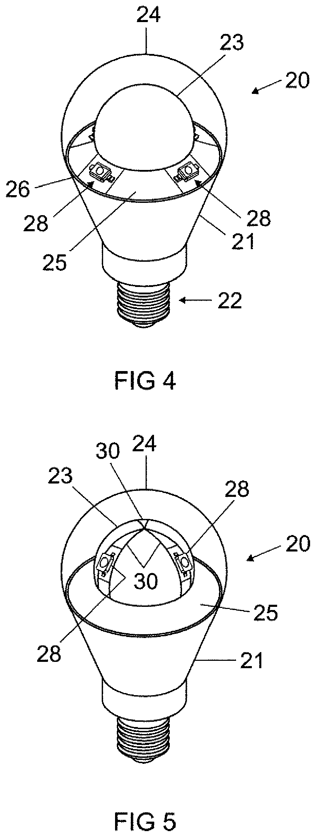

Figur 4 zeigt als Lichtsystem eine weiß emittierende LED-Lampe 20, mit einem Basisteil 21, das Elektronik enthält, einem unten daran angesetzten Sockel 22, einer inneren Kuppel 23 und einer äußeren Kuppel 24. Auf dem Basisteil sind im Zentrum ähnlich wie in Figur 2a blau emittierende LEDs eingebracht (nicht sichtbar, siehe Figur 2a). Die innere Kuppel 23 ist gleichmäßig mit Leuchtstoff beschichtet, der einen Teil der primären Strahlung der blauen LEDs in gelbe bis grüne Strahlung konvertiert. Dazu eignet sich insbesondere ein Granat wie YaGaG:Ce oder LuAGAG:Ce, oder ein anderer Granat der Formel A3B5O12:Ce. Auf einem Kragenteil 25 des Basisteils sitzen, dem Rand 26 des Basisteils benachbart, mehrere längerwellig emittierende LEDs 28, die insbesondere rot oder Magenta oder orange emittieren. Sie sind bevorzugt gleichmäßig beabstandet. Besonders bevorzugt ist das Kragenteil 25 als Kreisring realisiert und leicht abgeschrägt nach außen geneigt wie dargestellt.

Die Mischung zu weiß erfolgt durch eine Diffusorschicht oder Streuschicht auf einer äußeren Kuppel 24, die sowohl die innere Kuppel 23 als auch den Kreisring 25 mit den roten LEDs 28 umschließt. Insgesamt ergibt sich dadurch eine kompakte weiß emittierende LED-Lampe 20.

Figur 5 zeigt ein besonders bevorzugt bevorzugtes Ausführungsbeispiel einer LED-Lampe 20, das ähnlich wie in Figur 4 beschreiben aufgebaut ist. Im Unterschied dazu sind aber die roten LEDs 28 nicht auf dem Kreisring 25 montiert. Stattdessen sind sie in streifenartigen Abschnitten 30 montiert, die auf der inneren Kuppel 23 angebracht sind und frei von Leuchtstoff sein können. Diese streifenartigen Abschnitte 30 können polar orientiert sein, also quasi entlang von Breitengraden der Kuppel 23. Insbesondere können zwei bis vier derartige polare Streifen 30 verwendet werden, die gleichmäßig voneinander beabstandet sind. Bevorzugt sitzt dabei eine rote LED 28 auf einem Streifen 30, es können auch zwei bis vier rote LED auf einem derartigen Streifen 30 untergebracht werden.

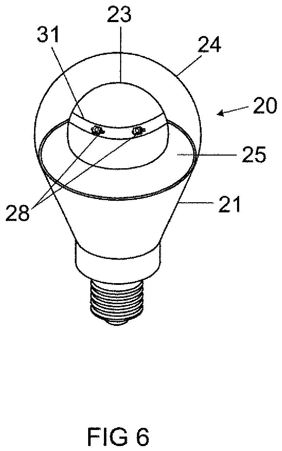

Figur 6 zeigt ein weiteres Ausführungsbeispiel einer LED-Lampe 20, bei der ein äquatorialer Streifen 31 Anwendung findet, der auf der inneren Kuppel 23 umläuft, und auf dem die roten LEDs 28 montiert sind. Allgemein können auch mehrere parallele Streifen, die entlang von Längengraden orientiert sind, verwendet werden. Dabei lassen sich im Allgemeinen zwei bis fünf LEDs auf einem Streifen unterbringen.

Die Streifen können auch schräg zu Längengraden bzw. Breitengraden der inneren Kuppel 23 orientiert sein.

## Patentansprüche

1. Lichtsystem basierend auf mindestens zwei Chips, insbesondere Chips enthaltende LEDs, wobei ein Mittel zur zumindest teilweisen Konversion der Strahlung eines ersten Chips (2) vorhanden ist, wobei einem zur Konversion bestimmten ersten Chip eine einen Leuchtstoff enthaltende Schicht (6) als Konversionsmittel vorgelagert ist, die mindestens einen Teil der primären Strahlung des ersten Chips (2) in sekundäre Strahlung konvertiert, wobei der zweite Chip (3; 28) Strahlung größerer Wellenlänge als der erste Chip (2) emittiert, die Schicht (6) beabstandet vom ersten Chip (2) angeordnet ist, wobei der zweite Chip (3; 28) so angeordnet ist, dass seine Strahlung im wesentlichen nicht vom Leuchtstoff absorbiert wird, **dadurch gekennzeichnet, dass** der zweite Chip (3; 28) in Strahlrichtung aufwärts schräg eingesetzt ist.

2. Lichtsystem nach Anspruch 1, **dadurch gekennzeichnet, dass** der erste Chip (2) blau emittiert und dass der zweite Chip (3; 28) orange bis rot emittiert.

3. Lichtsystem nach Anspruch 1, **dadurch gekennzeichnet, dass** der Leuchtstoff blaue Strahlung absorbiert und grüne bis gelbe Strahlung emittiert.

4. Lichtsystem nach Anspruch 1, **dadurch gekennzeichnet, dass** der erste Chip (2) als ein Array auf einem Substrat realisiert ist.

5. Lichtsystem nach Anspruch 1, **dadurch gekennzeichnet, dass** die Schicht (6) auf einer transparenten Scheibe in Strahlrichtung vor dem ersten Chip (2) angebracht ist.

6. Lichtsystem nach Anspruch 1, **dadurch gekennzeichnet, dass** der zweite Chip (3) als ein Array realisiert ist, das außen um den Rand der Scheibe herum gruppiert ist, und das insbesondere oberhalb der Schicht (6) in Strahlrichtung gesehen angeordnet ist.

7. Lichtsystem nach Anspruch 1, **dadurch gekennzeichnet, dass** der Leuchtstoff einen Granat aufweist, der insbesondere Gallium und Aluminium gleichzeitig enthält.

8. Lichtsystem nach Anspruch 1, **dadurch gekennzeichnet, dass** das Lichtsystem ein topfartiges Gehäuse (4) aufweist, wobei der erste Chip (2) auf dem Boden des Topfes angebracht ist, und wobei die Schicht (6) als Deckel für den Topf wirkt.

9. Lichtsystem nach Anspruch 1, **dadurch gekennzeichnet, dass** oberhalb der Scheibe ein optisches Element, insbesondere ein Lichtleiter (9), angebracht ist, das die Strahlung beider Chips zu weiß mischt, insbesondere auf Basis des RGB-Mischprinzips.

10. Lichtsystem basierend auf mindestens zwei Chips, insbesondere Chips enthaltende LEDs, wobei ein Mittel zur zumindest teilweisen Konversion der Strahlung eines ersten Chips (2) vorhanden ist, wobei einem zur Konversion bestimmten ersten Chip eine einen Leuchtstoff enthaltende Schicht (6) als Konversionsmittel vorgelagert ist, die mindestens einen Teil der primären Strahlung des ersten Chips (2) in sekundäre Strahlung konvertiert, wobei der zweite Chip (3) Strahlung größerer Wellenlänge als der erste Chip (2) emittiert, die Schicht (6) beabstandet vom ersten Chip (2) angeordnet ist, wobei der zweite Chip (3; 28) so angeordnet ist, dass seine Strahlung im wesentlichen nicht vom Leuchtstoff absorbiert wird, **dadurch gekennzeichnet, dass** die den Leuchtstoff enthaltende Schicht (6) auf einer dem ersten Chip (2) zugewandten Seite eines Substrats (5) angebracht ist und die Dicke des Substrats (5) ausreichend ist, um die zweiten Chips (3) am seitlichen Rand des Substrats (5) anordnen zu können, so dass deren Strahlung in das Substrat (5) eingekoppelt wird.

11. Lichtsystem nach Anspruch 10, **dadurch gekennzeichnet, dass** der erste Chip (2) blau emittiert und dass der zweite Chip (3; 28) rot emittiert.

12. Lichtsystem nach Anspruch 10 oder 11, **dadurch gekennzeichnet, dass** der Leuchtstoff einen Granat aufweist, der insbesondere Gallium und Aluminium gleichzeitig enthält.

13. Lichtsystem basierend auf mindestens zwei Chips, insbesondere Chips enthaltende LEDs, wobei ein Mittel zur zumindest teilweisen Konversion der Strahlung eines ersten Chips vorhanden ist, wobei einem zur Konversion bestimmten ersten Chip eine einen Leuchtstoff enthaltende Schicht als Konversionsmittel vorgelagert ist, die mindestens einen Teil der primären Strahlung des ersten Chips in sekundäre Strahlung konvertiert, wobei der zweite Chip (28) Strahlung größerer Wellenlänge als der erste Chip emittiert, die Schicht beabstandet vom ersten Chip angeordnet ist, wobei der zweite Chip (28) so angeordnet ist, dass seine Strahlung im wesentlichen nicht vom Leuchtstoff absorbiert wird, **dadurch gekennzeichnet, dass** das Lichtsystem eine LED-Lampe (20) ist, wobei der Leuchtstoff auf einer ersten Kuppel (23) aufgebracht ist, die sich über die ersten Chips wölbt, und wobei die zweiten Chips (28) innerhalb einer zweiten Kuppel (24) sitzen, aber gleichzeitig außerhalb der ersten Kuppel (23), wobei die zweite Kuppel (24) ein Streumittel zum Mischen der Strahlung beider Chips aufweist.

14. Lichtsystem nach Anspruch 13, **dadurch gekennzeichnet, dass** die LED-Lampe (20) ein Basisteil (21) aufweist, von dem aus sich insbesondere die beiden Kuppeln (23; 24) wölben, wobei das Basisteil (21) einen umlaufenden Kreisring (26) aufweist, auf dem die zweiten Chips (28) montiert sind.

15. Lichtsystem nach Anspruch 13, **dadurch gekennzeichnet, dass** die zweiten Chips (28) außen auf der ersten Kuppel (23) angebracht sind, insbesondere auf streifenartigen Bändern (30; 31).

16. Lichtsystem nach Anspruch 13, **dadurch gekennzeichnet, dass** der erste Chip blau emittiert und dass der zweite Chip (28) rot oder Magenta oder orange emittiert.

17. Lichtsystem nach Anspruch 13, **dadurch gekennzeichnet, dass** der Leuchtstoff blaue Strahlung absorbiert und grüne bis gelbe Strahlung emittiert.

## Claims

1. Light system based on at least two chips, in particular LEDs containing chips, wherein a means for at least partially converting the radiation of a first chip (2) is provided, wherein a layer (6) containing a phosphor as conversion means is mounted in front of a first chip intended for the conversion, which phosphor-containing layer converts at least some of the primary radiation of the first chip (2) into secondary radiation, wherein the second chip (3; 28) emits radiation with a greater wavelength than the first chip (2), the layer (6) is arranged spaced apart from the first chip (2), wherein the second chip (3; 28) is arranged in such a way that its radiation is substantially not absorbed by the phosphor, **characterized in that** the second chip (3; 28) has been inserted upwards at an angle in the radiation direction.

2. Light system according to Claim 1, **characterized in that** the first chip (2) emits blue, and **in that** the second chip (3; 28) emits orange to red.

3. Light system according to Claim 1, **characterized in that** the phosphor absorbs blue radiation and emits green to yellow radiation.

4. Light system according to Claim 1, **characterized in that** the first chip (2) is realized as an array on a substrate.

5. Light system according to Claim 1, **characterized in that** the layer (6) is applied to a transparent disk in front of the first chip (2) in the radiation direction.

6. Light system according to Claim 1, **characterized in that** the second chip (3) is realized as an array which has been grouped externally around the rim of the disk and which is arranged in particular above the layer (6), when viewed in the radiation direction.

7. Light system according to Claim 1, **characterized in that** the phosphor has a garnet which contains in particular gallium and aluminum.

8. Light system according to Claim 1, **characterized in that** the light system has a pot-like housing (4), wherein the first chip (2) is applied to the base of the pot, and wherein the layer (6) acts as a cover for the pot.

9. Light system according to Claim 1, **characterized in that** an optical element, in particular an optical waveguide (9), is applied above the disk, which optical element mixes the radiation of both chips to give white, in particular on the basis of the RGB mixing principle.

10. Light system based on at least two chips, in particular LEDs containing chips, wherein a means for at least partially converting the radiation of a first chip (2) is provided, wherein a layer (6) containing a phosphor as conversion means is mounted in front of a first chip intended for the conversion, which phosphor-containing layer converts at least some of the primary radiation of the first chip (2) into secondary radiation, wherein the second chip (3) emits radiation with a greater wavelength than the first chip (2), the layer (6) is arranged spaced apart from the first chip (2), wherein the second chip (3; 28) is arranged in such a way that its radiation is substantially not absorbed by the phosphor, **characterized in that** the layer (6) containing the phosphor is applied to a side of a substrate (5) facing the first chip (2) and the thickness of the substrate (5) is sufficient to be able to arrange the second chips (3) at the lateral rim of the substrate (5), with the result that the radiation from said chips is coupled into the substrate (5).

11. Light system according to Claim 10, **characterized in that** the first chip (2) emits blue, and the second chip (3; 28) emits red.

12. Light system according to claim 10 or 11, **characterized in that** the phosphor has a garnet which contains in particular gallium and aluminum.

13. Light system based on at least two chips, in particular LEDs containing chips, wherein a means for at least partially converting the radiation of a first chip is provided, wherein a layer containing a phosphor as conversion means is mounted in front of a first chip intended for the conversion, which phosphor-containing layer converts at least some of the primary radiation of the first chip into secondary radiation, wherein the second chip (28) emits radiation with a greater wavelength than the first chip, the layer is arranged spaced apart from the first chip, wherein the second chip (28) is arranged in such a way that its radiation is substantially not absorbed by the phosphor, **characterized in that** the light system is an LED lamp (20), wherein the phosphor is applied to a first dome (23), which arches over the first chips, and wherein the second chips (28) are positioned within a second dome (24), but at the same time outside the first dome (23), wherein the second dome (24) has a scattering means for mixing the radiation of both chips.

14. Light system according to Claim 13, **characterized in that** the LED lamp (20) has a basic part (21), from which in particular the two domes (23; 24) arch, wherein the basic part (21) has a peripheral circular ring (26), on which the second chips (28) are mounted.

15. Light system according to Claim 13, **characterized in that** the second chips (28) are applied externally to the first dome (23), in particular to strip-like bands (30; 31).

16. Light system according to Claim 13, **characterized in that** the first chip emits blue, and **in that** the second chip (28) emits red or magenta or orange.

17. Light system according to Claim 13, **characterized in that** the phosphor absorbs blue radiation and emits green to yellow radiation.

## Revendications

1. Système lumineux se basant sur au moins deux puces, en particulier des LED contenant des puces, dans lequel un moyen destiné à une conversion au moins partielle du rayonnement d'une première puce (2) est présent, dans lequel une couche (6) contenant un matériau luminescent est montée en amont d'une première puce destinée à la conversion en tant que moyen de conversion, laquelle couche convertit au moins une partie du rayonnement primaire de la première puce (2) en rayonnement secondaire, dans lequel la deuxième puce (3 ; 28) émet un rayonnement ayant une longueur d'onde plus grande par rapport à la première puce (2), la couche (6) est disposée à distance de la première puce (2), dans lequel la deuxième puce (3 ; 28) est disposée de sorte que son rayonnement n'est pour l'essentiel pas absorbé par le matériau luminescent, **caractérisé en ce que** la deuxième puce (3 ; 28) est placée inclinée vers l'avant dans la direction du rayon.

2. Système lumineux selon la revendication 1, **caractérisé en ce que** la première puce (2) émet du bleu et **en ce que** la deuxième puce (3 ; 28) émet de l'orange jusqu'au rouge.

3. Système lumineux selon la revendication 1, **caractérisé en ce que** le matériau luminescent absorbe un rayonnement bleu et émet un rayonnement allant du vert jusqu'au jaune.

4. Système lumineux selon la revendication 1, **caractérisé en ce que** la première puce (2) est réalisée sur un substrat en tant que matrice.

5. Système lumineux selon la revendication 1, **caractérisé en ce que** la couche (6) est placée sur un disque transparent dans la direction du rayonnement en amont de la première puce (2) .

6. Système lumineux selon la revendication 1, **caractérisé en ce que** la deuxième puce (3) est réalisée en tant que matrice qui est groupée autour de la bordure du disque à l'extérieur et qui est disposée en particulier au-dessus de la couche (6) vue dans la direction du rayonnement.

7. Système lumineux selon la revendication 1, **caractérisé en ce que** le matériau luminescent présente un grenat qui contient en même temps en particulier du gallium et de l'aluminium.

8. Système lumineux selon la revendication 1, **caractérisé en ce que** le système lumineux présente un boîtier de type pot (4), dans lequel la première puce (2) est placée sur la partie inférieure du pot, et dans lequel la couche (6) agit en tant que couvercle pour le pot.

9. Système lumineux selon la revendication 1, **caractérisé en ce que**, au-dessus du disque, un élément optique, en particulier un guide de lumière (9), est placé, lequel mélange le rayonnement des deux puces pour obtenir du blanc, en particulier sur la base du principe de mélange RVB.

10. Système lumineux se basant sur au moins deux puces, en particulier des LED contenant des puces, dans lequel un moyen destiné à une conversion au moins partielle du rayonnement d'une première puce (2) est présent, dans lequel une couche (6) contenant un matériau luminescent est montée en amont d'une première puce destinée à la conversion en tant que moyen de conversion, laquelle couche convertit au moins une partie du rayonnement primaire de la première puce (2) en rayonnement secondaire, dans lequel la deuxième puce (3) émet un rayonnement ayant une longueur d'onde plus grande par rapport à la première puce (2), la couche (6) est disposée à distance de la première puce (2), dans lequel la deuxième puce (3 ; 28) est disposée de sorte que son rayonnement n'est pour l'essentiel pas absorbé par le matériau luminescent, **caractérisé en ce que** la couche (6) contenant le matériau luminescent est placée sur une face d'un substrat (5) tournée vers la première puce (2) et l'épaisseur du substrat (5) est suffisante pour pouvoir disposer les deuxièmes puces (3) au niveau de la bordure latérale du substrat (5), de sorte que le rayonnement de celles-ci est couplé dans le substrat (5).

11. Système lumineux selon la revendication 10, **caractérisé en ce que** la première puce (2) émet du bleu et **en ce que** la deuxième puce (3 ; 28) émet du rouge.

12. Système lumineux selon la revendication 10 ou 11, **caractérisé en ce que** le matériau luminescent présente un grenat qui contient en particulier en même temps du gallium et de l'aluminium.

13. Système lumineux se basant sur au moins deux puces, en particulier des LED contenant des puces, dans lequel un moyen destiné à une conversion au moins partielle du rayonnement d'une première puce est présent, dans lequel une couche contenant un matériau luminescent est montée en amont d'une première puce destinée à la conversion en tant que moyen de conversion, laquelle couche convertit au moins une partie du rayonnement primaire de la première puce en rayonnement secondaire, dans lequel la deuxième puce (28) émet un rayonnement ayant une longueur d'onde plus grande que la première puce, la couche est disposée à distance de la première puce, dans lequel la deuxième puce (28) est disposée de sorte que son rayonnement n'est pour l'essentiel pas absorbé par le matériau luminescent, **caractérisé en ce que** le système lumineux est un éclairage LED (20), dans lequel le matériau luminescent est appliqué sur une première coupole (23) qui se voûte par-dessus la première puce, et dans lequel les deuxièmes puces (28) prennent assise à l'intérieur d'une deuxième coupole (24), mais en même temps à l'extérieur de la première coupole (23), dans lequel la deuxième coupole (24) présente un moyen de dispersion destiné au mélange du rayonnement des deux puces.

14. Système selon la revendication 13, **caractérisé en ce que** l'éclairage LED (20) présente une partie de base (21) à partir de laquelle en particulier les deux coupoles (23 ; 24) se voûtent, dans lequel la partie de base (21) présente une bague circulaire périphérique (26) sur laquelle sont montées les deux puces (28).

15. Système selon la revendication 13, **caractérisé en ce que** les deuxièmes puces (28) sont placées sur la première coupole (23) à l'extérieur, en particulier sur des rubans en forme de bande (30 ; 31).

16. Système lumineux selon la revendication 13, **caractérisé en ce que** la première puce émet du bleu et **en ce que** la deuxième puce (28) émet du rouge ou du magenta ou de l'orange.

17. Système lumineux selon la revendication 13, **caractérisé en ce que** le matériau luminescent absorbe un rayonnement bleu et émet un rayonnement allant du vert au jaune.
